# EUROPÄISCHE PATENTSCHRIFT

(11) **EP 1 398 238 B1**
(45) Veröffentlichungstag und Bekanntmachung des Hinweises auf die Patenterteilung: **11.01.2006**
(21) Anmeldenummer: 03015522.0
(22) Anmeldetag: 10.07.2003
(51) Int. Cl.: B60T 17/22

(54) **Diagnose- und Überwachungsvorrichtung einer Bremszuspanneinrichtung eines Fahrzeugs**
Diagnosis and monitoring device for a brake actuating device for a vehicle
Dispositif diagnostique et à surveillance d'un dispositif d'actuation de freins d'un véhicule

(30) Priorität: 25.07.2002 DE 10233845
(43) Veröffentlichungstag der Anmeldung: 17.03.2004
(73) Patentinhaber: KNORR-BREMSE Systeme für Schienenfahrzeuge GmbH, 80809 München (DE)
(72) Erfinder: Wagner, Thomas, 81373 München (DE); Friesen, Ulf, 81739 München (DE); Burkhart, Thomas, 85716 Unterschleissheim (DE)

(56) Entgegenhaltungen:
- WO-A-00/70575
- DE-A- 10 020 521
- DE-A- 19 935 899

## Beschreibung

### Stand der Technik

Die Erfindung betrifft eine Diagnose- und Überwachungsvorrichtung einer Bremszuspanneinrichtung eines Fahrzeugs, insbesondere eines Schienenfahrzeugs, gemäß dem Oberbegriff des Anspruchs 1.

Eine gattungsgemäße Vorrichtung ist aus dem Dokument DE 19935899 bekannt geworden.

Der vorliegenden Erfindung liegt die Aufgabe zugrunde, eine Vorrichtung der eingangs erwähnten Art bereitzustellen, mit welcher eine differenzierte Diagnose einer Bremszuspanneinrichtung eines Fahrzeugs möglich ist.

Erfindungsgemäß wird diese Aufgabe durch die Merkmale des Anspruchs 1 gelöst.

### Vorteile der Erfindung

Weil die erfindungsgemäße Vorrichtung Fehlerdaten und/oder Betriebs- und Zustandsdaten über den momentanen Zustand und das Lastkollektiv der Bremszuspanneinrichtung liefert, können leicht Rückschlüsse auf deren Funktionsfähigkeit bzw. auf Fehlerursachen gezogen werden. Andererseits ermöglichen die genannten Daten auch eine präzise Diagnose und Ausfallfrüherkennung von Kom-ponenten der Bremszuspanneinrichtung. Anstatt wie bisher die Wartung nach Überschreiten von Grenzwerten oder in bestimmten Zeitintervallen vorzunehmen, kann sie nun in Abhängigkeit des tatsächlich vorliegenden Verschleißes der Komponenten bzw. der aufgetretenen Fehler erfolgen. Verschleißteile wie Gummidichtungen, Buchsungen etc. sind beispielsweise nicht nach einer bestimmten Einsatzdauer tauschreif, sondern nach einer bestimmten Anzahl von Zuspannungen. Das System ermöglicht folglich eine intelligente und vorausschauende Wartung. Defekte und Schwachstellen können frühzeitig erkannt und Folgeschäden vermieden werden. Weiterhin wird die Fehlersuche vereinfacht und die Wartung und der Teileaustausch gezielt auf die einen Fehler oder Verschleiß aufweisenden Komponenten beschränkt, ohne daß sämtliche Komponenten einzeln überprüft werden müßten. Da mögliche Fehlerquellen im Konstruktions- bzw. Prototypenstadium oft nicht zu erkennen sind, wird durch die während des Betriebs vorgenommene Fehler- und Vetschleißdiagnose eine kontinuierliche Verbesserung des Bremssystems möglich.

Durch die in den Unteransprüchen aufgeführten Maßnahmen sind vorteilhafte Weiterbildungen und Verbesserungen der im Patentanspruch 1 angegebenen Erfindung möglich.

Gemäß einer bevorzugten Ausführungsform der Erfindung wirkt das auslesbare Speichermedium mit einer Mikrorechnereinheit derart zusammen, daß die Fehlerdaten und die Betriebs- und Zustandsdaten einander zeitlich zugeordnet werden. Die einander zugeordneten Fehlerdaten einerseits und Betriebs- und Zustandsdaten andererseits werden dann als Datensätze gespeichert, welche beispielsweise Daten über den einem Fehler zugeordneten Fehlercode, den Zeitpunkt und die Zeitdauer des Fehlers sowie den während des Zeitpunkts oder der Zeitdauer des Fehlers vorliegenden Betriebszustand der Bremszuspanneinrichtung, deren Komponenten und/oder deren Steuerung enthalten. Weil die über den Zustand der Bremszuspanneinrichtung und deren Komponenten Informationen liefernden Betriebsdaten zeitlich koordiniert mit dem Fehlerereignis aufgenommen und gespeichert werden, kann die Fehlerursache einfach und schnell festgestellt werden, da von Erfahrungswerten abweichende Betriebsdaten auf eine Fehlerquelle schließen lassen.

Weil es einen großen Aufwand bedeuten würde, jeder einzelnen Komponente der Bremszuspanneinrichtung einen eigenen Sensor zuzuordnen und weil auch bestimmte. Fehler oder Verschleißvorgänge nur aus einer Verknüpfung verschiedener Sensorsignale detektierbar sind, wirkt das auslesbare Speichermedium mit der Mikrorechnereinheit vorzugsweise derart zusammen, daß zumindest ein Teil der Betriebsdaten untereinander zu Betriebskennzahlen verknüpft werden. Unter Betriebskennzahl soll dabei eine Kennzahl verstanden werden, aus welcher sich Rückschlüsse auf die Funktionsfähigkeit und auf den Verschleißzustand von Komponenten einer Bremszuspanneinrichtung, ihrer Ansteuerung sowie der Interaktionen der Baugruppen untereinander ziehen lassen. Der Verschleiß der Buchsung eines Kraftmeßbolzens einer Bremszuspanneinrichtung läßt sich beispielsweise aus der Kraft-Weg-Kennlinie der Bremszuspanneinrichtung erkennen.

In besonders zu bevorzugender Weise umfaßt das Fahrzeug mehrere Bremszuspanneinrichtungen, von welchen zumindest einigen eine eigene lokale Diagnose- und Überwachungseinrichtung zugeordnet ist, wobei die lokalen Diagnose- und Überwachungseinrichtungen Diagnose- und Fehlerdaten an eine übergeordnete Diagnose- und Überwachungseinrichtung des Bremssystems oder Fahrzeugs liefern. Hierdurch ergibt sich eine verteilte Struktur der erfindungsgemäßen Vorrichtung, wobei das übergeordnete Überwachungs- und Diagnosesystem die Daten der lokalen Systeme sammelt und weiterverarbeitet.

In besonders zu bevorzugender Weise sind die lokalen Diagnose- und Überwachungseinrichtungen in lokale Bremssteuergeräte der Bremszuspanneinrichtungen und die übergeordnete Diagnose- und Überwachungseinrichtung in ein zentrales Bremssteuergerät integriert. Hierdurch wird Bauraum gespart, außerdem können Verkabelungen entfallen, welche ansonsten zur Signalübertragung aufgrund der Überwachung und Diagnose der lokalen und übergeordneten Bremssteuergeräte vorzusehen wären.

Das Speichermedium wird beispielsweise durch einen auch stromlos funktionsfähigen und nichtflüchtigen Speicher gebildet. Dann können auch im Falle eines lokalen oder fahrzeugweiten Bordstromausfalls die Diagnose- und Fehlerdaten aus dem Speicher ausgelesen werden.

Vorzugsweise weist die erfindungsgemäße Vorrichtung wenigstens eine mit einer lokalen oder übergeordneten Diagnose- und Überwachungseinrichtung kommunizierende Anzeigeeinrichtung zur Anzeige der Diagnose- und Fehlerdaten auf. Die Anzeigevorrichtung kann mit einem stationären Empfänger verbunden sein, welchem die Diagnose- und Fehlerdaten telemetrisch durch einen mit dem Fahrzeug mitgeführten Sender übermittelbar sind. Bevorzugt wird diese Maßnahme bei Schienenfahrzeugen eingesetzt. Dann befindet sich die Anzeigeeinrichtung mit dem Empfänger in einer Wartungsstation, so daß das Wartungsteam stets über den Verschleißzustand und über Fehler der Bremszuspanneinrichtungen der sich im Verkehr befindenden Schienenfahrzeuge informiert ist und bedarfsweise die auszutauschenden Bremselemente bereitstellen und das betreffende Schienenfahrzeug zur Wartung anfordern kann.

### Zeichnungen

Ausführungsbeispiele der Erfindung ist in der Zeichnung dargestellt und in der nachfolgenden Beschreibung näher erläutert. In der Zeichnung zeigt:
- Fig.1: ein schematisches Blockschaltbild einer Kommunikationsstruktur eines Bremssystems eines Schienenfahrzeugs, in welches die erfindungsgemäße Vorrichtung integriert ist;
- Fig.2: ein schematisches Diagramm zur Veranschaulichung eines Zeitrahmens, innerhalb dessen Betriebs- und Zustandsdaten um ein auslösendes Ereignis herum gespeichert werden;
- Fig.3: ein Diagramm der Anzahl der Speicherfeder-Auslösungen über der Bremskraft als Beispiel für eine Betriebskennzahl;
- Fig.4: ein Diagramm der Bremskraftänderungen über der Bremskraft als Beispiel für eine weitere Betriebskennzahl;
- Fig.5: ein Beispiel für einen Fehlerdatensatz;
- Fig.6: eine schematische Darstellung einer übergeordneten Überwachungsund Diagnoseeinrichtung;
- Fig.7: ein Diagramm zur Veranschaulichung der Fehleraufzeichnung in Abhängigkeit von der Zeit;
- Fig.8: ein weiteres Diagramm zur Veranschaulichung der Fehleraufzeichnung in Abhängigkeit von der Zeit.

### Beschreibung des Ausführungsbeispiels

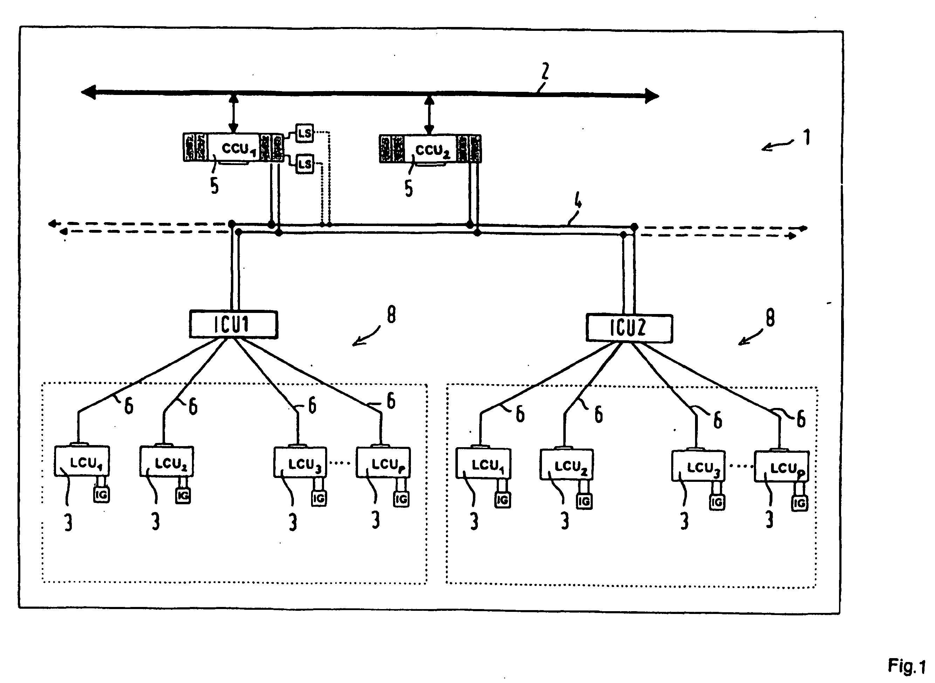

In Fig.1 ist aus Maßstabs- und Übersichtlichkeitsgründen von einem bevorzugten Beispiel einer erfindungsgemäßen Vorrichtung zur Überwachung und Diagnose von Bremszuspanneinrichtungen lediglich die Kommunikationsstruktur 1 zwischen den Bremszuspanneinrichtungen zugeordneten lokalen Diagnose- und Überwachungseinrichtungen 3 dargestellt, welche Daten an zwei übergeordnete Diagnose- und Überwachungseinrichtungen 5 liefern. Vorzugsweise ist die Vorrichtung in das Bremssystem eines Schienenfahrzeugs mit elektromechanischen Bremszuspanneinrichtungen integriert, beispielsweise in eine S-Bahn.

Unter dem Begriff Bremszuspanneinrichtung soll eine lokale Bremszuspanneinrichtung zur Abbremsung eines Rades oder der Räder einer Achse des Fahrzeugs verstanden werden. Die vorzugsweise elektromechanische Bremszuspanneinrichtung umfaßt einen Elektromotor und einen mechanischen Kraftumsetzer zur Wandelung der Drehbewegung in eine lineare Bremszuspannbewegung von Bremsbeläge tragenden Bremsbacken in Richtung auf eine Bremsscheibe. Neben dieser Betriebsbremseinheit ist weiterhin beispielsweise auch eine Sicherheitsbremseinheit mit einem eine Speicherfeder enthaltenden Federspeicher vorhanden. Eine solche elektrornechanische Bremszuspanneinrichtung ist beispielsweise in der DE 199 45 701 A1 beschrieben. Weiterhin ist der Bremszuspanneinrichtung ein eigenes lokales Bremsteuergerät zugeordnet. Jedoch kann das erfindungsgemäße Überwachungs- und Diagnosesystem auch in jeglicher anderer Art von Bremssystem und Fahrzeug verwendet werden.

Vorzugsweise sind die lokalen Diagnose- und Überwachungseinrichtungen 3 in lokale Bremssteuergeräte LCU₁...LCUₚ der Bremszuspanneinrichtungen und die übergeordneten Diagnose- und Überwachungseinrichtungen 5 in zwei zentrale Bremssteuergeräte CCU₁, CCU₂ integriert, welche aus Sicherheitsgründen redundant vorhanden sind. Alternativ kann auch nur ein zentrales Bremssteuergerät CCU mit nur einer übergeordneten Diagnose- und Überwachungseinrichtung 5 vorgesehen sein. Da die erfindungsgemäße Überwachungs- und Diagnosevorrichtung im vorliegenden Fall in die Steuerung des Bremssystems des Schienenfahrzeugs eingebunden ist, soll zunächst letztere erläutert werden. Eine obere Steuerebene des Bremssystems der S-Bahn wird durch die beiden zentralen Bremssteuergeräte CCU₁ und CCU₂ gebildet, die systemübergreifend in die übrige Schienenfahrzeugelektronik eingebunden sind, indem sie von einem Schienenfahrzeug-Datenbus 2 Signale empfangen, welche für den gesamten Schienenfahrzeugverband der S-Bahn von Bedeutung sind, wie beispielsweise das Bremsanforderungssignal eines Bremswertgebers, ein Parkbremssignal oder ein Störungssignal. Die beiden redundant vorhandenen, zentralen Bremssteuergeräte CCU₁, CCU₂ stehen über einen globalen Bremssystem-Datenbus 4 miteinander in Verbindung, so daß bei Ausfall eines der zentralen Bremssteuergeräte CCU₁, CCU₂ das jeweils andere dessen Aufgaben übernehmen kann. Außerdem kann dadurch eine gegenseitige Funktionsüberwachung erfolgen. Lastsensoren LS erfassen die momentane Last der S-Bahn und senden ein entsprechendes Signal an die zentralen Breinssteuergeräte CCU₁, CCU₂, die daraufhin die Bremsanforderurig lastabhängig anpassen. Ausgangsgrößen der beiden zentralen Bremssteuergeräte CCU₁, CCU₂ sind unter anderem Bremskraftsollwerte für mehrere an den globalen Bremssystem-Datenbus 4 angeschlossene Bremssteuergeräte ICU₁, ICU₂ einer mittleren Steuerebene. Der globale Bremssystem-Datenbus 4 stellt daher die Kommunikation zwischen den zentralen Bremssteuergeräten CCU₁, CCU₂ der oberen Steuerebene und den Bremssteuergeräten ICU₁, ICU₂ der mittleren Steuerebene sicher.

Der globale Bremssystem-Datenbus 4 ist vorzugsweise als CAN-Bus mit linearer Busstruktur ausgebildet d.h. die zentralen Bremssteuergeräte CCU₁, CCU₂ der oberen Steuerebene und die Bremssteuergeräte ICU₁, ICU₂ der mittleren Steuerebene sind in nebengeordneter Weise an den globalen Bremssystem-Datenbus 4 angeschlossen, ohne daß der Ausfall eines Teilnehmers die Verfügbarkeit der anderen Teilnehmer beeinflußt. Der globale Bremssystem-Datenbus 4 ist darauf ausgelegt, die Kommunikation innerhalb eines großen Schienenfahrzeugverbandes zu ermöglichen und wird vorzugsweise mit einer relativ niedrigen Übertragungsrate von ca. 125 kBits/s betrieben, um eine zuverlässige Datenübertragung auch bei einer maximalen Buslänge von ca. 250 m noch gewährleisten zu können. Um die Verfügbarkeit zu erhöhen, kann auch der globale Bremssystem-Datenbus 4 redundant ausgeführt sein. Zusätzlich zu den beiden zentralen Bremssteuergeräten CCU₁, CCU₂ können auf dem globalen Bremssystem-Datenbus 4 weitere Geräte wie Steuerungen, Sensoren, Aktoren angeschlossen werden, welche im Schienenfahrzeugverband verteilt sind.

Auf einer unteren Steuerebene dienen die lokalen Bremssteuergeräte LCU₁..LCUₚ zur Ansteuerung der elektromechanischen Bremszuspanneinhchtungen, wobei jeweils ein lokales Bremssteuergerät LCU₁ einer Bremszuspanneinrichtung zugeordnet ist. Hierbei sind die lokalen Bremssteuergeräte LCU₁..LCUₚ eines Teils eines Schienenfahrzeugs, eines Schienenfahrzeugs oder eines Teils des Schienenfahrzeugverbandes wie beispielsweise eines Drehgestells oder eines einzelnen Wagens der S-Bahn jeweils zu einer Gruppe zusammengefasst, wobei jedes lokale Bremssteuergerät LCU₁ einer Gruppe über.. einen separaten, lokalen Bremssystem-Datonbus 6 mit dem der betreffenden Gruppe zugeordneten Bremssteuergerät ICUᵢ der mittleren Steuerebene kommunizierend in Verbindung steht. Die lokalen Bremssteuergeräte LCU₁..LCUₚ einer solchen Gruppe tauschen somit in einer stemförmigen Struktur mit dem zugeordneten Bremssteuergerät ICU₁ der mittleren Steuerebene Daten aus und sind an dieses jeweils mittels einer "Punkt-zu-Punkt-Verbindung" angeschlossen. Die Bremssteuergeräte ICU₁, ICU₂ der mittleren Steuerebene stellen dabei Datenverteiler bzw. Datenfilter für die ihnen jeweils zugeordnete Gruppe von lokalen Bremsteuergeräten LCU₁..LCUₚ dar. Beispielsweise kann es aufgrund einer lastabhängigen Bremsanforderung erforderlich sein, einem oder mehreren lokalen Bremssteuergeräten LCU₁..LCUₚ innerhalb einer Gruppe andere Bremskraftsollwerte zuzuweisen als den restlichen lokalen Bremssteuergeräten LCU₁..LCUₚ der Gruppe. Darüber hinaus kann beispielsweise auch ein Bremswertabgleich aufgrund unterschiedlicher Erwärmung der Bremszuspanneinrichtungen innerhalb einer Gruppe notwendig sein.

In den lokalen Bremssystem-Datenbussen 6 sind höhere Daten-Übertragungsraten möglich als innerhalb des globalen, sich räumlich wesentlich weiter erstreckenden Bremssystem-Datenbusses 4, so daß innerhalb eines durch ein Bremssteuergerät ICUᵢ der mittleren Steuerebene und die ihm zugeordneten lokalen Bremssteuergeräte LCU₁..LCUₚ gebildeten Moduls 8 schnelle Steuerungs- und Regelungsfünktionen wie beispielsweise eine Gleit- oder Schlupfregelung und/oder eine Bremskraftregelung realisiert werden können. Solche Regelfunktionen können in den Bremssteuergeräten lCU₁, ICU₂ der mittleren Steuerebene und/oder in den lokalen Bremssteuergeräten LCU₁..LCUₚ der unteren Steuerebene enthalten sein. Radnahe Impulsgeber IG melden hierzu die momentanen Radgeschwindigkeiten an die lokalen Bremssteuergeräte LCU₁..LCUₚ. An den globalen Bremssystem-Datenbus 4 können weitere solcher Module 8 angeschlossen werden, so dass das Bremssystem modular erweiterbar ist.

Die lokalen Bremssystem-Datenbusse 6 sind vorzugsweise CAN (Controller Area Network) - Datenbusse, die Datenübertragung erfolgt vorzugsweise ereignisgetriggert mit einer hohen Busfrequenz, welche in einem Bereich von ca. 500 bis 1000 kBits/s liegt. Die Realisierung der lokalen "Punkt-zu-Punkt-Verbindungen" kann sowohl über entsprechend spezifizierte Kupferdrahtleitungen als auch über Lichtwellenleiter erfolgen. Der globale CAN 4 und die lokalen CAN 6. stellen dann voneinander unabhängige und entkoppelte Bremssystem-Datenbusse dar.

Die in die lokalen Bremssteuergeräte LCU₁..LCUₚ integrierten lokalen Diagnose- und Überwachungseinrichtungen 3 liefem Daten an die in die zentralen Bremssteuergeräte CCU₁, CCU₂ integrierten übergeordneten Diagnose- und Überwachungseinrichtungen 5 und beinhalten mindestens ein auslesbares Speichermedium zur Speicherung folgender Daten :
a) Fehlerdaten betreffend die Art und/oder den Zeitpunkt des Auftretens und/oder die Dauer von bei der Bremszuspanneinrichtung, deren Komponenten und/oder deren Steuerung (LCU₁...Lcuₚ, ICU₁, ICU₂, CCU₁, CCU₂, 2, 4, 6) aufgetretenen Fehlern; und/oder
b) Betriebs- und Zustandsdaten der Bremszuspanneinrichtung, deren Komponenten und/oder deren Steuerung (LCU₁ ... LCUₚ, ICU₁, ICU₂, CCU₁, CCU₂, 2, 4, 6) wie beispielsweise Anzahl der Bremsungen, Bremskraft je Bremsung, Dauer der Bremsungen, mechanische, thermische, chemische Belastungen, Randbedingungen, und Ähnliches.

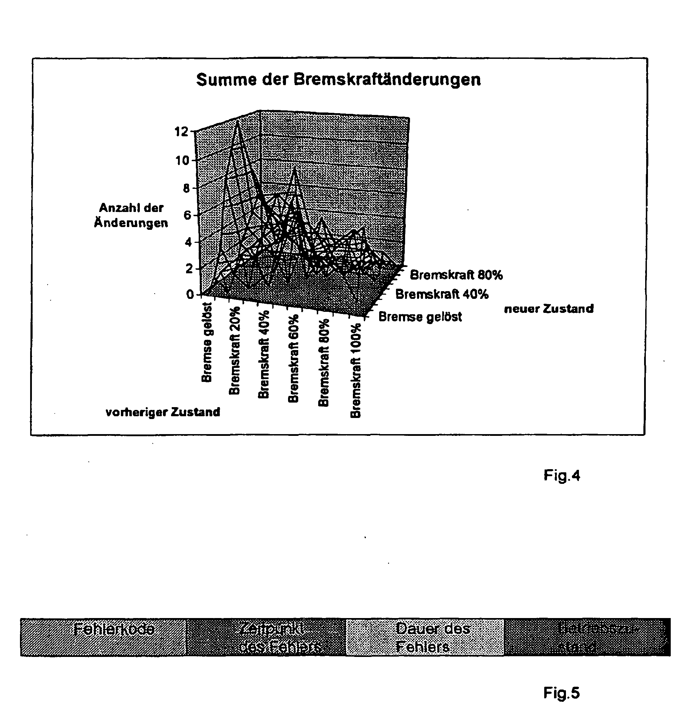

Das auslesbare Speichermedium kann durch eine einzige physikalische Speichereinheit oder durch mehrere solcher verkörpert sein. Beispielsweise können die Fehlerdaten und die Betriebs- und Zustandsdaten in voneinander getrennten Speichereinheiten abgelegt werden. Das Speichermedium wird vorzugsweise durch einen witterungs- und stoßunempfindlichen, auch stromlos funktionsfähigen und nichtflüchtigen Speicher gebildet, wie beispielsweise ein entsprechend gekapseltes EEPROM. Das Speichermedium wirkt mit einer Mikrorechnereinheit derart zusammen, daß die Fehlerdaten und die Betriebs- und Zustandsdaten einander zeitlich zugeordnet werden. Die einander zugeordneten Fehler- und Betriebsdaten werden als Datensätze gespeichert, welche beispielsweise Daten über den einem Fehler zugeordneten Fehlercode, den Zeitpunkt und die Zeitdauer des Fehlers sowie den während des Zeitpunkts oder der Zeitdauer des Fehlers vorliegenden Betriebszustand der zugeordneten Bremszuspanneinrichtung und/oder deren Steuerung LCU₁...LCUₚ, ICU₁, ICU₂, CCU₁, CCU₂, 2, 4, 6 enthalten. Ein Beispiel für einen solchen Datensatz ist in Fig.5 schematisch dargestellt.

Vorzugsweise jeder Bremszuspanneinrichtung und deren Steuerung sind Sensoren zur Erfassung von Betriebs- und Zustandsdaten und von Fehlerdaten vorgesehen. Zu solchen Sensoren zählen beispielsweise : Sensoren zur Messung der Bremskraft, Sensoren zur Messung der Drehzahl des Elektromotors, Temperatursensoren zur Messung der Temperatur des Elektromotors und/oder der Steuerung, Endlagenschalter zur Detektierung der momentanen Stellung der Bremszuspanneinrichtung und Ähnliche. Weiterhin sind der Ansteuerung der Bremszuspanneinrichtung zugeordnete Sensoren vorhanden, welche die Funktionen der lokalen Bremssteuergeräte LCU₁..LCUₚ, der Bremsteuergeräte ICU₁, ICU₂ der mittleren Steuerebene, der zentralen Bremssteuergeräte CCU₁, CCU₂ und der Datenbusse 2, 4, 6 sowie deren Interaktionen untereinander überwachen.

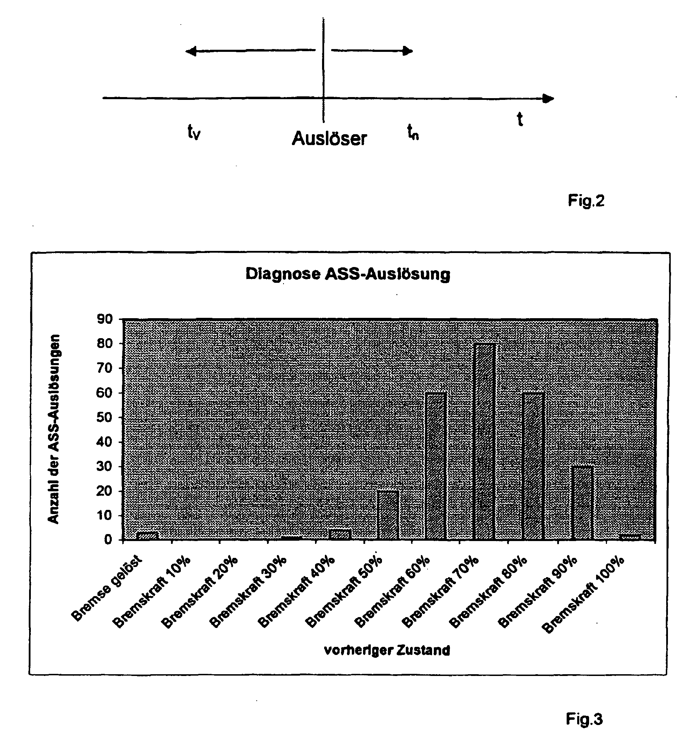

Das auslesbare Speichermedium ist vorzugsweise derart ausgebildet, daß eine dauerhafte Speicherung der Betriebs- und Zustandsdaten nur während eines Zeitraumes erfolgt, in welchen ein auslösendes Ereignis fällt, insbesondere das Auftreten eines Fehlers. Genauer erfolgt aufgrund eines auslösenden Ereignisses zum Zeitpunkt t, beispielsweise dem Auftreten eines Fehlers, eine Speicherung der Betriebs- und Zustandsdaten innerhalb eines Zeitraums zwischen einer Vorlaufzeit tᵥ und einer Nachlaufzeit tₙ, wobei der Zeitpunkt t innerhalb dieses Zeitraums liegt, wie Fig.2 zeigt. Zumindest die Vorlaufzeit tᵥ, die Nachlaufzeit tₙ, die Signalabtastrate sowie ein Signal für das auslösende Ereignis, z.B. durch manuelles Triggem, können mittels einer Eingabeeinheit in das Speichermedium eingegeben werden. Für Meßfahrten kann das Speichermedium als Meßdatenpuffer konfiguriert und die oben angeführten Variablen frei gewählt werden. Tritt beispielsweise der Fehter "Übertemperatur" auf, so ist der Bremskraftverlauf für die Fehlerdiagnose entscheidend. Auslösendes Ereignis für das Speichern des Bremskraftverlaufs innerhalb des genannten Zeitfensters ist demnach das Auftreten des Fehlers "Übertemperatur". Hierzu ist zunächst die Signalabtastrate zu bestimmen sowie die Vorlaufzeit tᵥ und die Nachlaufzeit tₙ. Beispielsweise in einem Ringspeicher wird das Signal "Bremskraft" ständig aufgezeichnet und auf das auslösende Ereignis "Übertemperatur" hin der während der Vorlaufzeit tᵥ und der Nachlaufzeit tₙ aufgezeichnete Verlauf in dem Speichermedium dauerhaft gespeichert.

Durch das Speichermedium erfolgt eine nichtflüchtige Aufzeichnung der den Bremszuspanneinrichtungen und deren Ansteuerung zugeordneten Signale zumindest während des Betriebs, wenigstens jedoch beim Auftreten von schwerwiegenden Fehlern, um die Fehlerursachen ermitteln zu können. Weiterhin wird vorzugsweise bei der Wartung oder Inbetriebnahme des Fahrzeugs die Funktion des Bremssystems überprüft und mit den Vorgaben aus der Projektierung verglichen. Hierzu werden ebenfalls die Betriebs- und Zustandsdaten der Bremszuspanneinrichtungen bei Testfahrten aufgezeichnet und ausgewertet. Aus den aufgezeichneten Betriebs- und Zustandsdaten lassen sich Rückschlüsse auf die Funktionsfähigkeit und auf den Verschleißzustand von Komponenten einer Bremszuspanneinrichtung, ihrer Ansteuerung sowie der Interaktionen der Baugruppen untereinander ziehen.

Eine zentrale Rolle kommt der Überwachung und Ermittlung des Verschleißes der Bremsbeläge der Bremszuspanneinrichtungen zu. Der Belagverschleiß kann beispielsweise durch mathematische Verschleißmodelle berechnet werden, wobei als Eingangsgröße dieses Modells beispielsweise die Bremsscheibentemperatur herangezogen wird. Kündigt sich ein Belagwechsel an, weil die Belagstärke weniger als beispielsweise 5 mm beträgt, werden diese Information sowie die Betriebs- und Zustandsdaten betreffend die momentane Belagstärke von der lokalen Überwachungs- und Diagnoseeinrichtung 3 an die zentrale Überwachungs- und Diagnoseeinrichtung 5 übermittelt. Die zentrale Überwachungs- und Diagnoseeinrichtung 5 speichert diese Daten und übermittelt sie beispielsweise an eine stationäre Werkstatt. Dort können dann vor Eintreffen des Schienenfahrzeugs die Bremsbeläge zum Tausch bereitgestellt werden, die verschlissen sind. Beim Auftreten eines selektiven Belagverschleißes (einseitiger, unsymmetrischer Bremsbelagverschleiß) kann dies sofort vor Ort erkannt werden, und die notwendigen Gegenmaßnahmen eingeleitet werden.

Weitere Kriterien für die Festlegung des Wartungszeitpunktes sind die Randbedingungen, in denen das Fahrzeug und die Betriebszuspanneinrichtungen betrieben wurden, wie beispielsweise die Umgebungstemperatur oder länderspezifische Parameter. Durch einen Temperatursensor kann ein Fahrzeugeinsatz z.B. im Dauerfrostbetrieb oder in einer Hochtemperaturumgebung erkannt werden, wodurch ein häufigerer Wechsel von Dichtungen und Schmierfetten erforderlich sein kann. Temperaturschwankungen können ebenfalls zu kürzeren Wartungsintervallen führen.

Weil es einen großen Aufwand bedeuten würde, jeder einzelnen Komponente der Bremszuspanneinrichtungen einen eigenen Sensor zuzuordnen und weit auch bestimmte Fehler oder aus einer Verknüpfung mehrerer verschiedener Sensorsignale detektierbar sind, wird zumindest ein Teil der aufgenommenen Betriebs- und Zustandsdaten untereinander zu Betriebskennzahlen verknüpft und beispielsweise in einer getrennten Speichereinheit gespeichert. Unter Beifiebskennzahl soll dabei eine Kennzahl verstanden werden, aus welcher sich Rückschlüsse auf die Funktionsfähigkeit und auf den Verschleißzustand von Komponenten einer Bremszuspanneinrichtung, ihrer Ansteuerung sowie der Interaktionen der Baugruppen untereinander ziehen lassen. Vorzugsweise werden die Betriebs- und Zustandsdaten mittels der Mikrocomputereinheit zu folgenden Betriebskennzahlen verknüpft bzw. direkt von den Sensoren detektiert:
- Anzahl der Luftspaltüberwindungen: Die Luftspaltüberwindungen werden über den Schalter "Bremse gelöst" detektiert. Beim Schalten des Schalters von "nicht gelöst" auf "gelöst" wird die Variable Wanzluftspalt inkrementiert.
- Anzahl der Speicherfeder-Entriegelungen: Beim Schalten des Endlagenschalters "Speicherfeder aufgezogen" wird die Variable wASSentriegelung inkrementiert.
- Anzahl der Bremsungen, 10*10%: Die IST-Bremskraft wird in 10%-Schritten diskretisiert. Die Variable lwBremskraefte wird dann erhöht, wenn insgesamt 100% Bremskraft zusammengekommen ist. Beispiel: Es wird einmal mit 42% eingebremst, ein zweites Mal mit 78%. Das ergibt jeweils ganzzahlig dividiert 42/10 = 4 addiert mit 78/10 = 7 ergibt 11. 11 ganzzahlig dividiert durch 10 = 1, lwBremskraefte wird also um 1 erhöht
- Anzahl der Motorbremsbetätigungen: Die Anzahl der Motorbremsbetätigungen wird registriert.
- Anzahl der Bremsungen mit über 70%: Bremsungen mit einer Differenz von der vorhergehenden zur momentanen Anforderung von mehr als 70% werden registriert.
- Anzahl der Motorumdrehungen gesamt, eventuell über der Bremskraft oder der Position.
- Betriebsstundenzähler (Elektromotor unter Strom, jedoch nicht in Parkbremsstellung).
- Bremsenergie, d.h. Bremskraft x Zeit.
- Einschaltdauer.
- Motorbremse nicht eingelegt.
- Speicherfeder verriegelt.
- Anzahl der Sicherheitsbremsungen über der Geschwindigkeit.
- Anzahl der Motorbremsbetätigungen in Lösestellung.
- Anzahl der Motorbremsbetätigungen im Energiesparmodus.
- Motortemperatur über der Bremskraft, über der Bremsenergie oder über der Zeit.
- Elektroniktemperatur über der Bremskraft, über der Bremsenergie oder über der Zeit.
- Anzahl der Gleitschutzauslösungen, vorzugsweise auch deren Intensität.
- Anzahl der Sicherheitsbremsungen über der Geschwindigkeit.
- Anzahl der Nachstellervorgänge.
- Anzahl der erfolgten Hilfs- und/oder Notlösevorgänge.
- Anzahl der Testläufe der Bremszuspanneinrichtung.
- Temperaturanderungen
- Anzahl der Schalterbetätigungen, jeweils von Speicherfeder-verriegelt-Schalter und Bremse-gelöst-Schalter.
- Bremsbelagspiel.
- Bremskraftänderungen über der vorherigen Bremskraft.
- Anzahl der Speicherfeder-Auslösungen, vorzugsweise aufgeteilt in Parkbremsauslösungen und Sicherheitsbremsungen.

Als Beispiel ist in Fig.3 bezüglich letztgenannter Betriebskennzahl ein Schaubild der Anzahl der Speicherfeder-Auslösungen ("ASS-Auslösungen") in Abhängigkeit von der gemessenen Bremskraft gezeigt. Ein weiteres anschauliches Beispiel für eine Betriebskennzahl liefert Fig.4, wo Bremskraftänderungen über der Bremskraft dargestellt sind.

Weiterhin werden Betriebskennzahlen gespeichert, welche die übergeordnete Bremssystemebene betreffen und welche sich aus Sensorsignalen herleiten, die nur auf dieser übergeordneten Ebene und nicht auf der Ebene der Bremszuspanneinrichtungen auftreten. Hierzu zählen beispielsweise
• Daten über Bremskraftmanagement-Eingriffe
• Anzahl der Aufrüst- bzw. Abrüstvorgänge
• Fehler auf der Bremssystem-Ebene, z.B. Bus-Übertragungsfehler
• Anzahl der Betriebsstunden
• Anzahl der vom Fahrzeug zurückgelegten Kilometer

Vorzugsweise können die zur Speicherung und Anzeige gewünschten Betriebskennzahlen ausgewählt werden. Weiterhin können Betriebskennzahlen vorgegeben werden, die unabhängig von einem spezifischen Fahrzeug oder von einer spezifischen Bremsenkonfiguration in jedem Fall gespeichert werden. Der Anwender kann über ein Terminal weitere Betriebskennzahlen zur Aufzeichnung auswählen. Beispielsweise wird die Anzahl der Bremsbetätigungen immer registriert, weil dadurch auf den Verschleiß rückgeschlossen werden kann, während die Häufigkeit des Einschaltens der Motorsteuerung lediglich optional protokolliert wird, nachdem es in der Konfiguration ausgewählt wurde.

Das die Betriebskennzahlen, die Fehlerdaten und die Betriebs- und Zustandsdaten speichernde Speichermedium verfügt über eine Schnittstelle zum Auslesen dieser Daten. Zusätzlich werden die Daten der einzelnen lokalen Diagnose- und Überwachungseinrichtungen an die übergeordnete Diagnose- und Überwachungseinrichtung übermittelt und dort gespeichert. Zur Anzeige der Daten ist eine mit der übergeordneten Diagnose- und Überwachungseinrichtung kommunizierende Anzeigeeinrichtung vorgesehen, welche beispielsweise im Führerhaus der S-Bahn angeordnet ist. Wie bereits erwähnt, können die gespeicherten Betriebskennzahlen, Fehlerdaten, Betriebs- und Zustandsdaten darüber hinaus während des Fahrzeugeinsatzes an eine Wartungsleitstelle übermittelt werden. Dies kann z.B. über Zugfunk, GSM oder Telemetrie erfolgen.

Den lokalen Diagnose- und Überwachungseinrichtungen und der übergeordnete Diagnose- und Überwachungseinrichtung können jeweils eine Fehlergruppe zugeordnet sein, welche beispielsweise leichte, schwerwiegende Fehler und den Fehler "Totalausfall" beinhaltet. Abhängig von der Zuordnung eines Fehlers zur Fehlergruppe der lokalen Diagnose- und Überwachungseinrichtungen oder zur Fehtergruppe der übergeordneten Diagnose- und Überwachungseinrichtung kann ein und derselbe Fehler in unterschiedlicher Gewichtung klassifiziert und/oder angezeigt werden. Eine solche Einteilung in Fehlergruppen hilft, die Tragweite von Fehlern zu unterscheiden. Beispielsweise muß bei einem Ausfall eines Kraftmeßbolzens einer lokalen Bremszuspanneinrichtung diese durch Lösen außer Betrieb genommen werden. Die zugeordnete lokale Diagnose- und Überwachungseinrichtung speichert dann einen schwerwiegenden Fehler, weil die zugeordnete Bremszuspanneinrichtung, außer Betrieb gesetzt ist. Die übergeordnete Diagnose- und Überwachungseinrichtung hingegen meldet jedoch dem Fahrzeugführer nur einen leichten Fehler, weil die anderen Bremszuspanneinrichtungen noch intakt sind und die Mindestverzögerung gewährleisten. Bei Ausfall mehrerer Brerinszuspanneinrichtungen hingegen meldet auch die übergeordnete Diagnose- und Überwachungseinrichtung einen schwerwiegenden Fehler, weil dann die vorgeschriebene Mindestverzögerung des Zuges nicht mehr gewährleistet ist. Ab welcher Anzahl ausgefallener Bremszuspanneinrichtungen ein schwerer Fehler gemeldet wird, hängt unter anderem von der Art und Bauweise des Schienenfahrzeugs ab. Als Reaktion auf einen Ausfall mehrerer lokaler Bremszuspanneinrichtungen wird dann beispielsweise die Höchstgeschwindigkeit reduziert oder der Zug wird angehalten. Ein weiterer kritischer Fall ist eine im eingebremsten Zustand defekte Bremszuspanneinrichtung, die sich nicht mehr in Lösestellung bringen lässt. Eine notwendige Reaktion ist dann das Hilfslösen der Bremse durch den Zugführer.

Im folgenden sind weitere Beispiele für die Fehlergruppen der lokalen und übergeordneten Diagnose- und Überwachungseinrichtungen 3, 5 aufgeführt :

### Lokale Diagnose- und Überwachungseinrichtung :

- leichter Fehler
   kein Bremskraftverlust, aber Grenzwertüberschreitung von Sensorwerten.
- schwerwiegender Fehler
   Bremskraftverlust, beispielsweise bei teilweiser oder vollständigem Ausfall der Versorgungsspannung.
- Totalausfall
   Wenn selbst eine Sicherheitsbremsung wirkungslos bleibt. Dies ist nach einem Hilfs- oder Notlösen der Fall.

### Übergeordnete Diagnose- und Überwachungseinrichtung:

- leichter Fehler
   Erreicht beispielsweise eine Bremszuspanneinrichtung eine zu hohe Betriebstemperatur, können durch die übergeordneten Diagnose- und Überwachungseinrichtung Gegenmaßnahmen ergriffen werden. Bei einem schweren Fehler mehrerer Bremszuspanneinrichtungen, auf den durch erfolgreiches Lösen reagiert wird und das Bremsvermögen des Fahrzeugs nicht verringert wird, meldet die übergeordnete Diagnose- und Überwachungseinrichtung ebenfalls einen leichten Fehler.
- schwerwiegender Fehler
   Mehrere Bremszuspanneinrichtungen sind ausgefallen. Es ist mit relevantem Bremskraftverlust zu rechnen.
- Totalausfall
   Beispielsweise sind die zentralen Bremssteuergeräte CCU₁, CCU₂ ausgefallen, es besteht keine Buskommunikation mehr mit, dem Fahrzeugbus oder das Hilfslösen einer lokalen Bremszuspanneinrichtung nach deren Totalausfall wurde nicht durchgeführt, so daß die zugeordnete Achse eingebremst bleibt.

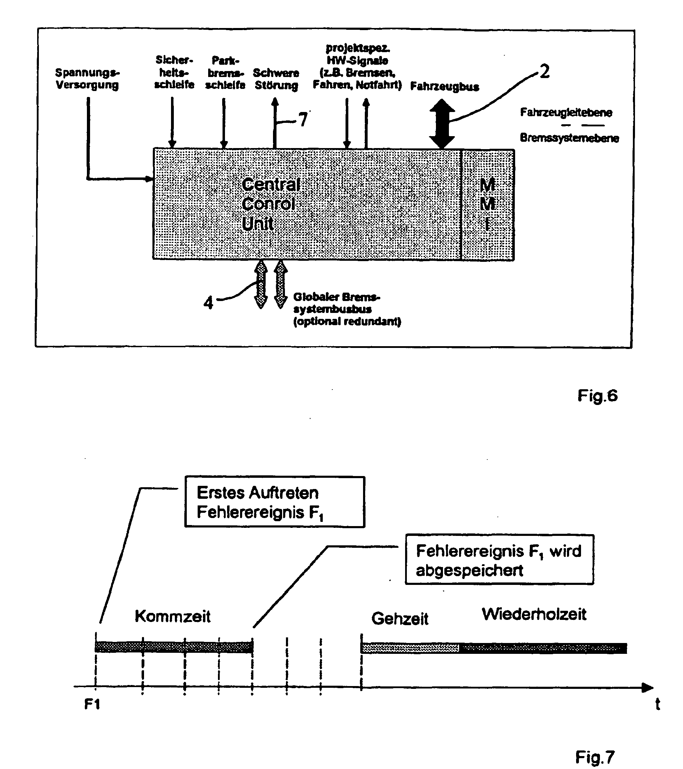

An die Fahrzeugteitebene werden von der übergeordneten Überwachungs- und Diagnoseeinrichtung 5 Diagnose- und Fohterdatensatze sowohl über den Fahrzeugbus 2 als auch über eine separate Leitung 7 übertragen, wie aus Fig.6 hervorgeht. Ober die separate Leitung 7 werden insbesondere schwerwiegende Störungen als Fehler signalisiert.

Für jede mögliche Art von Fehler ist eine Kommzeit, Gehzeit und Wiederholzeit definiert. Die Kommzeit gibt die Zeitdauer an, bis zu der ein Fehler nicht in den Fehlerspeicher geschrieben wird, wenn er vor deren Ablauf wieder verschwindet. Die Wiederholzeit gibt die Zeitdauer an, die der betreffende Fehler verschwunden sein muß, damit er beim erneuten Auftreten wieder registriert wird. Tritt nach Ablauf der Wiederholzeit der gleiche Fehler erneut auf, muss erneut reagiert werden.

Wenn beispielsweise gemäß Fig.7 ein Fehler F₁ periodisch auftritt, wird F₁ nach Ablauf der Kömmzeit gespeichert. Ab dem Zeitpunkt des letzten Auftritts von F₁ vergeht die Gehzeit, nach deren Ablauf wird der Fehler F₁ gelöscht. Tritt der gleiche Fehler F₁ erneut auf, wird er erst wieder abgespeichert, wenn er nach Ablauf der Wiederholzeit erscheint.

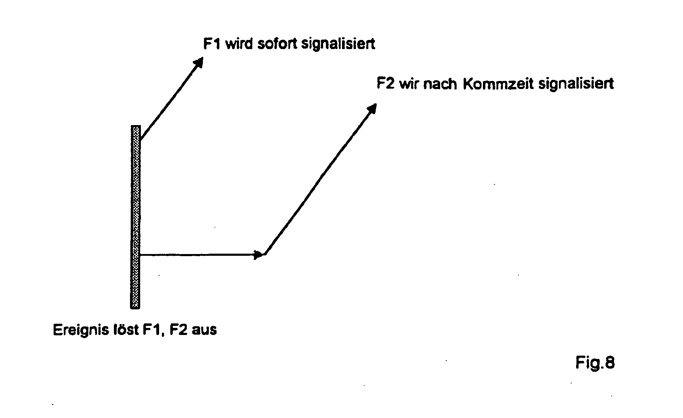

Wenn gemäß einem weiteren Beispiel an einer Bremszuspanneinrichtung die Motorbremse im geöffneten Zustand klemmt, so wird der zugeordnete Fehler F₁ sofort gemeldet (Kommzeit Null), wie Fig.8 zeigt, und der Zugführer wird aufgefordert, die Hilfslöseeinrichtung zu betätigen, während die Bremszuspanneinrichtung über Motorkraft in der gelösten Stellung verbleibt. Dieser Zustand ist ein Ausnahmezustand, der nur begrenzte Zeit aufrechterhalten werden kann, da der Motor für Dauerbelastung nicht ausgelegt ist. Folglich wird ein weiterer Fehler F₂ gemeldet, wenn nach einer Kommzeit keine Rückmeldung "Hilfsgelöst" an den Zugführer erfolgt.

Die verschiedenen Fehler- und Diagnosedatensätze werden vorzugsweise unterschiedlichen Adressaten zugeordnet. Dies kann beispielsweise durch eine Speicherung oder Anzeige der Fehler- und/oder Diagnosedaten in unterschiedlichen Speichermedien oder Anzeigeeinrichtungert erfolgen. Bei den meisten Fehlern muß eine Wartung der betroffenen Baugruppe erfolgen, für Softwarefehler ist der Inbetriebsetzer zuständig, schwerwiegende Fehler in den zentralen Bremssteuergeräten CCU₁, CCU₂ werden dem Fahrzeugführer angezeigt. Dabei ist zu unterscheiden, ob eine Hilfslösung eingeleitet werden muß und/oder mit reduzierter Bremskraft weitergefahren wird. In einigen Fällen kann eine Reaktion auf einen Fehler durch die Diagnose- und Überwachungseinrichtung vorgeschlagen und dem Fahrzeugführer signalisiert werden. Hierzu kann in die Diagnose- und Überwachungseinrichtung ein Expertensystem auf der Basis künstlicher Intelligenz integriert sein.

Wenn beispielsweise der Fehler "ERR_TR_ASS_WINDUP_TIMER" während eines Tests einer Bremszuspanneinrichtung auftritt, wird er nach dem Ablaufen eines Timers beim Aufziehen der Speicherfeder der Bremszuspanneinrichtung angezeigt, wenn der Endlagenschalter "Speicherfeder aufgezogen" nicht betätigt wurde. Dafür gibt es zwei mögliche Gründe : Entweder konnte das nötige Drehmoment zum Aufziehen der Speicherfeder nicht aufgebracht werden oder der Endlagenschalter ist defekt. Ein defekter Endlagenschalter ist die Fehlerursache, wenn die eingesetzte Kraft stetig bis zu einem bestimmten Endwert anstieg und somit ein defekter Motor nicht plausibel erscheint. Ein Endlagenschaltertausch durch den Inbetriebsetzer kann die Fehlfunktion dann beheben. In Tabelle 1 ist ein Beispiel einer entsprechenden Fehlerinformation für den Inbetriebsetzer dargestellt. Auf den Fehler wird der Zugführer durch eine Wamlampe hingewiesen mit der Aufforderung, die entsprechende Bremszuspanneinrichtung vor der Weiterfahrt hilfszulösen.

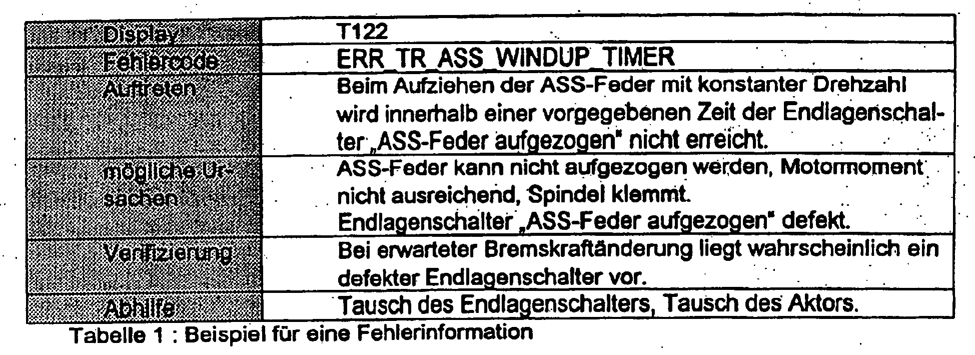

Tritt ein schwerer Fehler auf und kann die entsprechende Bremszuspanneinrichtung gelöst werden oder wird die Bremszuspanneinrichtung durch den Zugführer erfolgreich hilfsgelöst, wird der Fehlerspeicher "eingefroren". Die entsprechende Biremszuspanneinrichtung ist dann außer Betrieb gesetzt und eine weitere Aufzeichnung von Fehlern wäre sinnlos. Nach der Wartung oder Reparatur wird der Fehlerspeicher zurückgesetzt.

### Bezugszeichenliste

- 1: Kommunikationsstruktur
- 2: Sehienenfahrzeug-Datenbus
- 3: lokale Diagnose- und Überwachungseinrichtung
- 4: globaler Bremssystem-Datenbus
- 5: übergeordnete Diagnose- und Überwachungseinrichtung
- 6: lokaler Bremssystem-Datenbus
- 7: Leitung
- 8: Modul

- CCU: zentrales Bremssteuergerät einer oberen Steuerebene
- ICU: Bremssteuergerät einer mittleren Steuerebene
- LCU: Bremssteuergerät einer unteren Steuerebene
- IG: Impulsgeber
- LS: Lastsensor

## Patentansprüche

1. Diagnose- und Überwachungsvorrichtung von Bremszuspanneinrichtungen eines Fahrzeugs, insbesondere eines Schienenfahrzeugs, welche Sensoren zur Aufnahme und wenigstens ein auslesbares Speichermedium zur Speicherung folgender Daten aufweist:
a) Fehlerdaten betreffend die Art und/oder den Zeitpunkt des Auftretens und/oder die Dauer von bei den Bremszuspanneinrichtungen, deren Komponenten und/oder deren Steuerungen (LCU₁...LCUₚ, ICU₁, ICU₂, CCU₁, CCU₂, 2, 4, 6) aufgetretenen Fehlern; und
b) Betriebs- und Zustandsdaten der Bremszuspanneinrichtungen, deren Komponenten und/oder deren Steuerungen (LCU₁...LCUₚ, ICU₁, ICU₂, CCU₁, CCU₂, 2, 4, 6) wie beispielsweise Anzahl der Bremsungen, Bremskraft je Bremsung, Dauer der Bremsungen, mechanische, thermische, chemische Belastungen, Randbedingungen, und Ähnliches, **dadurch gekennzeichnet, daß**
c) zumindest einigen der Bremszuspanneinrichtungen jeweils eine eigene lokale Diagnose- und Überwachungseinrichtung (3) zugeordnet ist, wobei die lokalen Diagnose- und Überwachungseinrichtungen (3) die Fehlerdaten und die Betriebs- und Zustandsdaten an eine übergeordnete Diagnose- und Überwachungseinrichtung (5) des Bremssystems oder des Fahrzeugs liefern, und wobei
d) den lokalen Diagnose- und Überwachungseinrichtungen (3) der Bremszuspanneinrichtungen und der übergeordneten Diagnose- und Überwachungseinrichtung (5) jeweils eine Fehlergruppe zugeordnet ist, welche Fehler unterschiedlichen Grades beinhaltet, und wobei
e) abhängig von der Zuordnung eines Fehlers zur Fehlergruppe der lokalen Diagnose- und Überwachungseinrichtungen (3) oder zur lokalen Diagnose- und Überwachungseinrichtungen (3) oder zur Fehlergruppe der übergeordneten Diagnose- und Überwachungseinrichtung (5) ein und derselbe. Fehler in unterschiedlicher Gewichtung klassifizierbar und/oder anzeigbar ist.

2. Vorrichtung nach Anspruch 1, **dadurch gekennzeichnet, daß** eine Fehlergruppe leichte, schwerwiegende Fehler und den Totalausfall beinhaltet.

3. Vorrichtung nach Anspruch 1 oder 2, **dadurch gekennzeichnet, daß** das auslesbare Speichermedium mit einer Mikrorechnereinheit derart zusammenwirkt, daß die Fehlerdaten und die Betriebs- und Zustindsdaten einander zeitlich zugeordnet werden.

4. Vorrichtung nach Anspruch 3, **dadurch gekennzeichnet, daß** die einander zugeordneten Fehlerdaten und Betriebs- und Zustandsdaten als Datensätze gespeichert sind, welche Daten über den einem Fehler zugeordneten Fehlercode, den Zeitpunkt und die Zeitdauer des Fehlers sowie den während des Zeitpunkts oder der Zeitdauer des Fehlers vorliegenden Betriebszustand der zugeordneten Bremszuspanneinrichtung und/oder deren Steuerung (LCU₁...LCUₚ, ICU₁, ICU₂, CCU₁, CCU₂, 2, 4, 6) enthalten.

5. Vorrichtung nach Anspruch 3 oder 4, **dadurch gekennzeichnet, daß** das auslesbare Speichermedium mit einer Mikrorechnereinheit derart zusammenwirkt, daß zumindest ein Teil der Betriebs- und Zustandsdaten untereinander zu Betriebskennzahlen verknüpft werden, aus welchen sich Rückschlüsse auf die Funktionsfähigkeit und auf den Verschleißzustand von Komponenten der Bremszuspanneinrichtung, der Ansteuerung der Bremszuspanneinrichtung sowie der Interaktionen dieser Baugruppen untereinander ziehen lassen.

6. Vorrichtung nach Anspruch 5, **dadurch gekennzeichnet, daß** das auslesbare Speichennedium derart ausgebildet ist, daß eine Speicherung der Betriebs- und Zustandsdaten nur während eines Zeitraumes erfolgt, in welchen ein auslösendes Ereignis fällt, insbesondere das Auftreten eines Fehlers.

7. Vorrichtung nach Anspruch 6, **dadurch gekennzeichnet, daß** das auslesbare Speichermedium derart ausgebildet ist, daß aufgrund eines auslösenden Ereignisses zum Zeitpunkt (t), beispielsweise dem Auftreten eines Fehlers, eine Speicherung der Betriebs- und Zustandsdaten innerhalb eines Zeitraums zwischen einer Vorlaufzeit (tᵥ) und einer Nachlaufzeit (tₙ) erfolgt wobei der Zeitpunkt (t) innerhalb dieses Zeitraums liegt.

8. Vorrichtung nach Anspruch 7, **dadurch gekennzeichnet, daß** eine dem auslesbaren Speichermedium zugeordnete Eingabeeinheit vorgesehen ist, mit welcher zumindest die Vorlaufzeit (tᵥ), die Nachlaufzeit (tₙ), die Signalabtastrate sowie ein Signal für das auslösende Ereignis in das Speichermedium einlesbar sind.

9. Vorrichtung nach Anspruch 8, **dadurch gekennzeichnet, daß** das auslesbare Speichermedium durch einen auch stromlos funktionsfähigen und nichtflüchtigen Speicher gebildet wird.

10. Vorrichtung nach Anspruch 9, **dadurch gekennzeichnet, daß** die lokalen Diagnose- und Überwachungseinrichtungen (3) in lokale Bremssteuergeräte (LCU1... LCUₚ) der Bremszuspanneinrichtungen und die übergeordnete Diagnose- und Überwachungseinrichtung (5) in ein zentrales Bremssteuergerät (CCU₁, CCU₂) integriert sind.

11. Vorrichtung nach Anspruch 10, **dadurch gekennzeichnet, daß** dem Speichermedium eine Schnittstelle zum Auslesen der Fehlerdaten und/oder der Betriebs- und Zustandsdaten zugeordnet ist.

12. Vorrichtung nach Anspruch 11, **dadurch gekennzeichnet, daß** wenigstens eine Anzeigeeinrichtung zur Anzeige der Fehlerdaten und/oder der Betriebs- und Zustandsdaten vorhanden ist.

13. Vorrichtung nach Anspruch 12, **dadurch gekennzeichnet, daß** die Anzeigeeinrichtung mit einem stationären Empfänger verbunden ist; welchem die Fehlerdaten und/oder die Betriebs- und Zustandsdaten durch einen mit dem Fahrzeug mitgeführten Sender zur Femdiagnose Obermittelbar sind.

14. Vorrichtung nach Anspruch 13, **dadurch gekennzeichnet, daß** abhängig von der Art des Fehlers und/oder der Betriebs- und Zustandsdaten diese unterschiedlichen Adressaten, Speichermedien oder Anzeigeeinrichtungen zuweisbar sind.

15. Vorrichtung nach einem der vorhergehenden Ansprüche, **dadurch gekennzeichnet, daß** die Bremszuspanneinrichtung eine elektromechanische Bremszuspanneinrichtung ist und wenigstens einen Elektromotor und einen mechanischen Kraftumsetzer zur Wandelung der Drehbewegung in eine Bremszuspannbewegung beinhaltet.

16. Vorrichtung nach Anspruch 15, **dadurch gekennzeichnet, daß** eine Bremszuspanneinrichtung einem Rad oder der Räder einer Achse des Fahrzeugs zugeordnet ist.

## Claims

1. Diagnosis and monitoring device in a brake-actuating device of a vehicle, in particular of a rail vehicle, comprising sensors for detection and at least one readable storage medium for storing the following data:
(a) error data relating to the type and/or the time of occurrence and/or the period of errors appearing on said brake-actuating means, their components and/or their controllers (LCU₁ ... LCUₚ, ICU₁, ICU₂, CCU₁, CCU₂, 2, 4, 6); and
(b) operation and condition data of said brake-actuating means, their components and/or their controllers (LCU₁ ... LCUₚ, ICU₁, ICU₂, CCU₁, CCU₂, 2, 4, 6) such as the number of brake-actuating operations, the braking force per brake actuation, the periods of brake actuation, the mechanical, thermal, chemical loads, marginal conditions and the like,
**characterised in**
(c) **that** at least some of said brake-actuating means are each assigned to a separate local diagnosis and monitoring means (3), with said local diagnosis and monitoring means (3) supplying the error data and the operation and condition data to a un priority diagnosis and monitoring means (5) of the brake system or of the vehicle, and wherein
(d) a respective group of errors is assigned to each of said local diagnosis and monitoring means (3) of said brake-actuating means and to said priority diagnosis and monitoring means (5), with this group including errors at different degrees, and wherein
(e) it is possible to classify and/or display the one and the same error with different weightings in dependence on the assignment of an error to a group of errors of said local diagnosis and monitoring means (3) or to the group of errors of said priority diagnosis and monitoring means (5).

2. Device according to Claim 1, **characterised in that** a group of errors includes slight errors, serious errors and total failure.

3. Device according to Claim 1 or 2, **characterised in that** said readable storage medium cooperates with a micro computer unit in such a manner that the error data and the operation and condition data are assigned to each other in terms of time.

4. Device according to Claim 3, **characterised in that** said error data and the operation and condition data assigned to each other are stored in the form of data sets containing data relating to the error code assigned to an error, to the time and the period of the error as well as to the operating state of the brake-actuating means and/or its controller (LCU₁ ... LCUₚ, ICU₁, ICU₂, CCU₁, CCU₂, 2, 4, 6) that prevailed by the time or throughout the period of the error.

5. Device according to Claim 3 or 4, **characterised in that** said readable storage medium cooperates with a micro computer unit in such a way that at least one part of said operation and condition data are combined with each other so as to form operation indices permitting conclusions of the functional operability an d the condition of ware of the components of said brake-actuating means, of the controller of said brake-actuating means as well as of mutual interactions of these components.

6. Device according to Claim 5, **characterised in that** said readable storage medium is configured in such a manner that the storage of said operation and condition data takes place only during the interval of occurrence of a triggering event, particularly of occurrence of an error.

7. Device according to Claim 6, **characterised in that** said readable storage medium is configured in such a manner that, based on a triggering event by the point of time (t), for instance of the occurrence of an error, the storage of said operation and condition data takes place only during an interval between a leading period (tᵥ) and a following period (tₙ), with said point of time (t) being within the range of this interval.

8. Device according to Claim 7, **characterised in that** an input unit is provided which is assigned to said readable storage medium and which serves to read at least said leading period (tᵥ), said following period (tₙ), the signal sampling rate and a signal of the triggering event into said storage medium.

9. Device according to Claim 8, **characterised in that** said readable storage medium is constituted by a non-volatile memory also operating without current.

10. Device according to Claim 9, **characterised in that** said local diagnosis and monitoring means (3) are integrated into the brake controllers (LCU₁ ... LCUₚ) of said brake-actuating means and that said priority diagnosis and monitoring means (5) is integrated into a central brake controller (CCU₁, CCU₂).

11. Device according to Claim 10, **characterised in that** an interface for reading the error data and/or the operation and condition data is assigned t said storage medium.

12. Device according to Claim 11, **characterised in that** at least one display means is provided for displaying the error data and/or the operation and condition data.

13. Device according to Claim 12, **characterised in that** said display means is connected to a stationary receiver to which the error data and/or the operation and condition data may be communicated by means of a transmitter on board the vehicle for remote diagnosis.

14. Device according to Claim 13, **characterised in that**, in dependence on the type of the error and/or the operation and condition data, it is possible to assign the latter to different addressees, to different storage media or to different display means.

15. Device according to any of the preceding Claims, **characterised in that** said brake-actuating means is an electro-mechanical brake-actuating means and comprises at least one electric motor and a mechanical force converter for conversion of the rotational movement into a brake-actuating movement.

16. Device according to Claim 15, **characterised in that** a brake-actuating means is assigned to a wheel or to the wheels of an axle of the vehicle.

## Revendications

1. Installation de diagnostic et de contrôle de dispositif d'actionnement de frein d'un véhicule, notamment d'un véhicule ferroviaire, qui a des capteurs d'enregistrement et au moins un support de mémoire qui peut être lu en vue de mémoriser des données suivante :
a) des données de défaillance consistant en le type et/ou l'instant de l'apparition et/ou la durée de défaillance apparaissant dans les dispositifs d'actionnement de frein, leurs éléments et/ou leurs commandes (LCU₁...LCUₚ, ICU₁, ICU₂, CCU₁, CCU₂, 2, 4, 6) ; et
b) des données de fonctionnement et d'état des dispositifs d'actionnement de frein, de leurs éléments et/ou de leurs commandes (LCU₁...LCUₚ, ICU₁, ICU₂, CCU₁, CCU₂, 2, 4, 6) comme, par exemple, le nombre des freinages, la force de freinage à chaque freinage, la durée des freinages, les sollicitations mécaniques, thermiques, chimiques, les conditions extérieures et analogues, **caractérisée en ce que**
c) il est associé au moins à quelques uns des dispositifs d'actionnement de frein, respectivement un dispositif (3) local de diagnostic et de contrôle, les dispositifs (3) locaux de diagnostic et de contrôle fournissant les données de défaillance et les données de fonctionnement et d'état à un dispositif (5) hiérarchiquement supérieur de diagnostic et de contrôle du système de frein ou du véhicule et dans laquelle
d) il est associé aux dispositifs (3) locaux de diagnostic et de contrôle des dispositifs d'actionnement de frein et du dispositif (5) hiérarchiquement supérieur de diagnostic et de contrôle, respectivement un groupe de défaillances qui comporte des défaillances de degrés différents et dans laquelle
e) en fonction de l'affectation d'une défaillance à un groupe de défaillances des dispositifs (3) locaux de diagnostic et de contrôle ou à un groupe de défaillances du dispositif (5) hiérarchiquement supérieur de diagnostic et de contrôle, une seule et même défaillance peut être classée et/ou affichée suivant une pondération différente.

2. Installation suivant la revendication 1, **caractérisée en ce qu'**un groupe de défaillances comporte des défaillances légères, de défaillances graves et la panne totale.

3. Installation suivant la revendication 1 ou 2, **caractérisée en ce que** le support de mémoire qui peut être lue coopère avec une unité de microordinateur, de façon à ce que les données de défaillance et les données de fonctionnement et d'état soient associées les unes aux autres dans le temps.

4. Installation suivant la revendication 3, **caractérisée en ce que** les données de défaillance et les données de fonctionnement et d'état associées les unes aux autres sont mémorisées sous la forme de jeux de données, lesquels comportent par le code de défaillance associé à une défaillance l'instant et la durée de la défaillance ainsi que l'état de fonctionnement existant à l'instant de la défaillance ou pendant la durée de la défaillance, du dispositif d'actionnement de frein associé et/ou de sa commande (LCU₁...LCUₚ, ICU₁, ICU₂, CCU₁, CCU₂, 2, 4, 6).

5. Installation suivant la revendication 3 ou 4, **caractérisée en ce que** le support de mémoire qui peut être lu coopère avec une unité de microordinateur, de façon à ce qu'au moins une partie des données de fonctionnement et d'état soient combinées entre elles en des nombres caractéristiques de fonctionnement à partir desquels on peut tirer des conclusions sur l'aptitude à fonctionner et sur l'état d'usure d'éléments du dispositif d'actionnement de frein, de la commande du dispositif d'actionnement de frein ainsi que des interactions mutuelles entre ces modules.

6. Installation suivant la revendication 5, **caractérisée en ce que** le support de mémoire qui peut être lu est constitué de façon à ce qu'une mémorisation des données de fonctionnement et d'état n'a lieu que pendant un laps de temps pendant lequel il se produit un évènement déclenchant, notamment l'apparition d'une défaillance.

7. Installation suivant la revendication 6, **caractérisée en ce que** le support de mémoire qui peut être lue est constitué de façon à ce que sur la base d'un évènement déclenchant à l'instant (t), par exemple, l'apparition d'une défaillance, il s'effectue une mémorisation des données de fonctionnement et d'état dans un laps de temps compris entre un instant (tᵥ) antérieur et un instant (tₙ) postérieur, l'instant (t) se trouvant dans ce laps de temps.

8. Installation suivant la revendication 7, **caractérisée en ce qu'**il est prévu une unité d'entrée qui est associée au support de mémoire qui peut être lue et dans laquelle peuvent être lus au moins le temps (tᵥ) antérieur, le temps (tₙ) postérieur, le taux d'échantillonnage du signal ainsi qu'un signal pour l'évènement déclenchant dans le support de mémoire.

9. Installation suivant la revendication 8, **caractérisée en ce que** le support de mémoire qui peut être lu est formé par une mémoire pouvant fonctionner aussi sans courant et non volatile.

10. Installation suivant la revendication 9, **caractérisée en ce que** les dispositifs (3) locaux de diagnostic et de contrôle sont intégrés dans des appareils (LCU₁...LCUₚ) locaux de commande de frein des dispositifs d'actionnement de frein et le dispositif (5) hiérarchiquement supérieur de diagnostic et de contrôle dans un appareil (CCU₁, CCU₂) central de commande de frein.

11. Installation suivant la revendication 10, **caractérisée en ce qu'**au support de mémoire est associée une interface pour la lecture des données de défaillance et/ou des données de fonctionnement et d'état.

12. Installation suivant la revendication 11, **caractérisée en ce qu'**au moins un dispositif d'affichage est prévu pour afficher les données de défaillance et/ou les données de fonctionnement et d'état.

13. Installation suivant la revendication 12, **caractérisée en ce que** le dispositif d'affichage est relié à un récepteur fixe auquel les données de défaillance et/ou les données de fonctionnement et d'état peuvent être transmises pour télédiagnostic par un émetteur embarqué sur le véhicule.

14. Installation suivant la revendication 13, **caractérisée en ce que**, en fonction du type de la défaillance et/ou des données de fonctionnement et d'état, celles-ci peuvent être affectées à des adresses différentes, à des supports de mémoire différents ou à des dispositifs d'affichage différents.

15. Installation suivant l'une des revendications précédentes, **caractérisée en ce que** le dispositif d'actionnement de frein est un dispositif électromécanique d'actionnement de frein et comporte au moins un moteur électrique et un convertisseur mécanique de force pour la transformation du mouvement de rotation en un mouvement d'actionnement de frein.

16. Installation suivant la revendication 15, **caractérisée en ce qu'**un dispositif d'actionnement de frein est associé à une roue ou aux roues d'un essieu du véhicule.
